# EUROPEAN PATENT APPLICATION

(11) **EP 1 330 135 A2**
(43) Date of publication of application: **23.07.2003**
(21) Application number: 03000761.1
(22) Date of filing: 14.01.2003
(51) Int. Cl.: H04Q 7/32

(54) **Mobile communication system**

(30) Priority: 17.01.2002 JP 2002008823
(71) Applicant: MATSUSHITA ELECTRIC INDUSTRIAL CO., LTD., Kadoma-shi, Osaka 571-8501 (JP)
(72) Inventor: Kanamaru, Tomokazu, Kadoma-shi, Osaka-fu, 571-0055 (JP); Tominaga, Nobuki, Osaka-shi, Osaka-fu 543-0031 (JP)
(74) Representative: Gassner, Wolfgang, Dr.

(57) **Abstract**

In a mobile communication system, a distributing station (1) at least transmits identification information concerning a program which the distributing station is capable of transmitting to a mobile communication terminal device having entered a service area. After generating and transmitting a distribution request for the program corresponding to the received program identification information to the distributing station (1), the mobile communication terminal device (3) stores the program which is transmitted from the distributing station (1) in a memory. Furthermore, the mobile communication terminal device (3) generates an execution instruction for the program in the memory, and transmits it to an internal interpreter. In response to the received execution instruction, the interpreter executes the program in the memory. Thus, a mobile communication system which is capable of easily downloading a program can be provided.

## Description

### BACKGROUND OF THE INVENTION

### Field of the Invention

The present invention relates to a mobile communication system, and more particularly to a mobile communication system which allows a mobile communication terminal device to download a computer program from a distributing station.

### Description of the Background Art

Distribution services for providing sound data representing melodies for indicating an incoming call, or media contents such as image data have conventionally been available in mobile communication systems. In recent years, attempts have been made to incorporate a program distribution function in mobile communication systems for the purpose of providing novel services . In the present specification, "program distribution" is defined as the distribution, by a distributing station, of a computer program (hereinafter simply referred to as a "program" in the present specification) to a mobile communication terminal device (hereinafter simply referred to as a "terminal device" in the present specification), such as a cellular phone or a PHS (Personal Handy-phone System) phone. In such a program distribution, a terminal device downloads a program from the distributing station and executes the program. As a result, it becomes possible for the terminal device to realize various additional functions other than the originally-provided functions, such additional functions arbitrarily selected by the user.

One promising software architecture for realizing program distribution as such is JAVA^{(R)}. JAVA^{(R)} provides a virtual machine mechanism, and is capable of allowing application software (hereinafter simply referred to as an "application(s)" in the present specification) to operate irrespectively of the hardware or the OS (Operating System) of the device which incorporates JAVA^{(R)}. Therefore, JAVA^{(R)} is considered as a promising software architecture, not only in the field of computing, e.g., workstations and personal computers (hereinafter abbreviated as "PCs"), but also in terms of realizing program distribution for home appliance.

As a specific example of the aforementioned program distribution, distribution services of game programs for cellular phones have already been launched, which enable users to download their favorite game programs as they want, such that the downloaded games can be enjoyed on the cellular phone at any time. Furthermore, in future, various applications, e.g., telephone directories or schedule books, may be provided through program distribution. Through such distribution of applications, users will be allowed to download and use applications which have functions of their choice, user interfaces which they find easy to use, or screen structures according to their liking.

Some terminal devices are equipped not only with wireless communication equipment for realizing voice calls over medium to long distances, but also with short-distance transmission/reception equipment which is based on infrared or radiowaves. Services which employ terminal devices equipped with such short-distance transmission/reception equipment as controllers for predetermined target devices have been promoted on an extension of the aforementioned program distribution. For example, the aforementioned service may involve using a terminal device as: i) a remote control for a home appliance such as a television or an air conditioner; ii) a device, used in a restaurant, with which a user selects and orders an item from a menu, iii) a device used in a library, with which a user searches for or reserves books or magazines, iv) a device used in a shop such as a bookstore, a compact disk shop, or a department store, with which a user searches for a location to look for a desired item or an item which is present in the shop, or makes a reservation for an item to be purchased. In order to realize each such service, a program for controlling a target device is required which is executable at the terminal device.

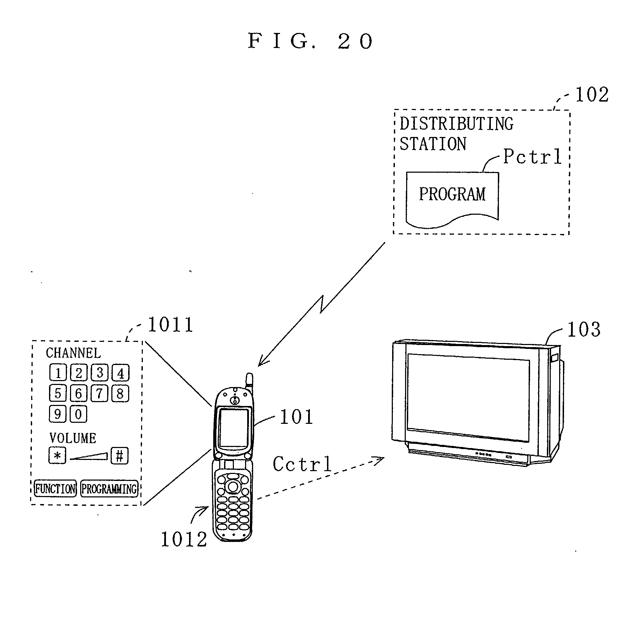

FIG. 20 is a schematic diagram illustrating an overall structure of a mobile communication system which realizes a service in category i) above. In FIG. 20, a terminal device 101 downloads a program Pctrl for controlling a television 103 from an external distributing station 102. Thereafter, in response to a user operation, the terminal device 101 executes the downloaded program Pctrl and displays a screen 1011 which is necessary for remote-controlling the television 103. While referring to the displayed screen 1011, the user operates an input device 1012 of the terminal device 101. In response to this operation, the terminal device 101 generates a command Cctrl and transmits it to the television 103 by means of short-distance transmission/reception equipment within the terminal device 101. The television 103 performs a process designated by the received command Cctrl. Representative examples of the process performed by the television 103 are channel switching or sound volume adjustment. In this manner, the terminal device 102 can be employed as a controller for remote-controlling the television 103.

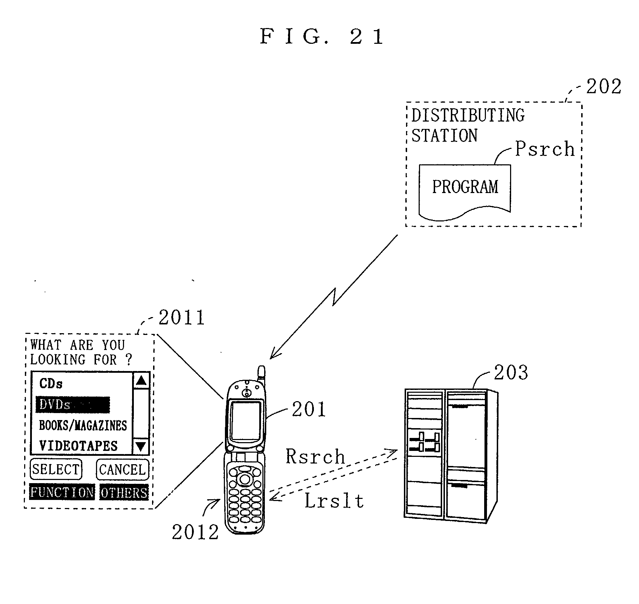

FIG. 21 is a schematic diagram illustrating an overall structure of a mobile communication system which realizes a service in category iv) above. For conciseness, the following description will be directed to an item search, while disregarding ordering of items. In FIG. 21, from an external distributing station 202, the terminal device 201 downloads a program Psrch for an item search. Thereafter, in response to a user operation, the terminal device 201 executes the downloaded program Psrch and displays a screen 2011 which is necessary for the item search. Referring to the displayed screen 2011, the user operates an input device 2012 of the terminal device 201 to select a desired item. In response to this operation, the terminal device 201 generates a search request Rsrch and sends it to an item search server (hereinafter abbreviated as a "server") 203. In response to the received search request Rsrch, the server 203 performs an item search, and returns a search result (e.g., a list of items which have been found) Lrslt to the terminal device 201. The terminal device 201 displays the received search result Lrslt on the screen 2011, thereby letting the user know an inventory of items or where the desired item can be found.

However, in accordance with the mobile communication system shown in FIG. 20 or FIG. 21, the user needs to operate the terminal device 101 or 201 to select and download an appropriate program Pctrl or Psrch. Such an operation is cumbersome to the user, and is inconvenient. In particular, in many cases, downloading involves complicated user operations to be performed on the input device 1012 or 2012, e.g., designating a place to store the program Pctrl or Psrch (e.g., a URL (Uniform Resource Locator), or making a selection on a menu screen. Therefore, as such services increase in number in the future and as programs for adding various functions to the terminal device 101 or 201 become more prevalent, the complexity of the operation required for user to downloads such programs will presumably increase.

### SUMMARY OF THE INVENTION

Therefore, an object of the present invention is to provide a mobile communication system which permits a program to be easily downloaded

The present invention has the following features to attain the above object. One aspect of the present invention is directed to a mobile communication system comprising a mobile communication terminal device and a distributing station which distributes a program previously stored in the distributing station to the mobile communication terminal device when the mobile communication terminal device is in a service area. The distributing station includes a service start notification section for at least transmitting identification information concerning a program which the distributing station is capable of distributing to the mobile communication terminal device having entered the service area. The mobile communication terminal device includes a download processing section for generating a distribution request for the program corresponding to the program identification information received from the service start notification section, the generated distribution request being transmitted from the mobile communication terminal device to the distributing station.

The distributing station further includes a program distribution section for distributing the program to the mobile communication terminal device in response to the received distribution request. The mobile communication terminal device further includes: a program storage section for storing the program transmitted from the program distribution section, a program execution instructing section for generating and transmitting an execution instruction for the program stored in the program storage section, and a program execution section for executing the program stored in the program storage section in response to the execution instruction from the program execution instructing section.

According to the above aspect of the present invention, when the mobile communication terminal device enters a service area, the mobile communication terminal device automatically downloads a program from the distributing station and executes the downloaded program. The user does not need to perform any operation for the downloading. Thus, a mobile communication system which is more convenient than a conventional mobile communication system is provided.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a schematic diagram illustrating the structure of a mobile communication system Sa according to one embodiment of the present invention;
FIG. 2 is a schematic diagram illustrating entries Esn which are recorded in location information DB (DataBase) 21 of an exchange station 2 shown in FIG. 1;
FIG. 3 is a block diagram illustrating the detailed structure of a distributing station 1 shown in FIG. 1;
FIG. 4 is a block diagram illustrating the detailed structure of a mobile communication terminal device 3 shown in FIG. 1;
FIG. 5 is a schematic diagram illustrating program identification information Icp which is recorded in a program identification information recording section 32 shown in FIG. 4;
FIG. 6 is a schematic diagram illustrating entries Ecp which are recorded in an executable program recording section 36 shown in FIG. 4;
FIG. 7 is a flowchart illustrating a processing procedure by a service start notification section 12 shown in FIG. 3;
FIG. 8 is a flowchart illustrating a processing procedure by a download processing section 33 shown in FIG. 4;
FIG. 9 is a flowchart illustrating a processing procedure by a program execution instructing section 34 shown in FIG. 4;
FIG. 10 is a flowchart illustrating a processing procedure by a service completion notification section 13 shown in FIG. 3;
FIG. 11 is a flowchart illustrating a processing procedure by a program execution stopping section 37 shown in FIG. 4;
FIG. 12 is a flowchart illustrating a processing procedure by a program deletion section 38 shown in FIG. 4;
FIG. 13 is a schematic diagram illustrating the structure of a mobile communication system Sb as a variant of the mobile communication system Sa shown in FIG. 1;
FIG. 14 is a block diagram illustrating the detailed structure of a mobile communication terminal device 5 shown in FIG. 13;
FIG. 15 is a schematic diagram illustrating entries Ehy which are recorded in a program execution history recording section 53 shown in FIG. 14;
FIG. 16 is a flowchart illustrating a processing procedure by a history-dependent download processing section 51 shown in FIG. 14;
FIG. 17 is a flowchart illustrating a processing procedure by a history-dependent program execution instructing section 52 shown in FIG. 14;
FIG. 18 is a flowchart illustrating a processing procedure by a program execution history editing section 54 shown in FIG. 14;
FIG. 19 is a flowchart illustrating a processing procedure by a history-dependent program deletion section 55 shown in FIG. 14;
FIG. 20 is a schematic diagram illustrating a first exemplary structure of a conventional mobile communication system; and
FIG. 21 is a schematic diagram illustrating a second exemplary structure of a conventional mobile communication system.

### DESCRIPTION OF THE PREFERRED EMBODIMENTS

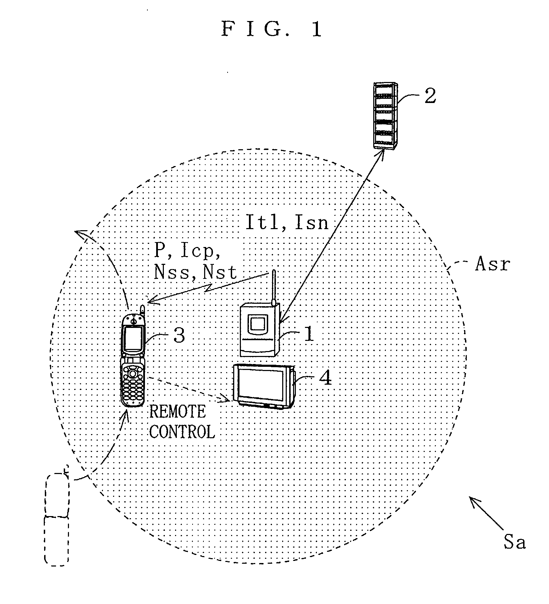

FIG. 1 is a schematic diagram illustrating the structure of a mobile communication system Sa according to one embodiment of the present invention. The present mobile communication system Sa is constructed so as to be capable of providing a program distribution service (hereinafter abbreviated as a "service") which is specific to the present embodiment, and comprises at least one distributing station 1, at least one exchange station 2, at least one mobile communication terminal device (hereinafter abbreviated as a "terminal device")3, and at least one target device 4 (only one of each is shown in FIG. 1).

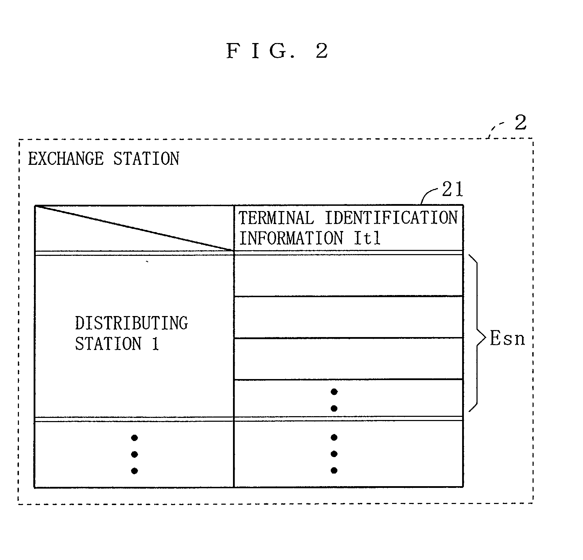

The distributing station 1 is preferably incorporated in a common type of base station which is accommodated within the mobile communication system Sa. The distributing station 1 receives a control signal which is periodically transmitted from the terminal device 3, and performs a known location registration technique based on the received control signal. As a result, as shown in FIG. 2, in a location information database (hereinafter referred to as a "location information DB")21 of the exchange station 2, identification information (hereinafter referred to as "terminal identification information") which uniquely identifies each terminal device 3 is registered in an entry Esn for the distributing station 1. When calling up the terminal device 3 or performing a data communication with the terminal device 3, the exchange station 2 identifies any distributing station 1 mediating the communication with the terminal device 3 with reference to such an entry Esn.

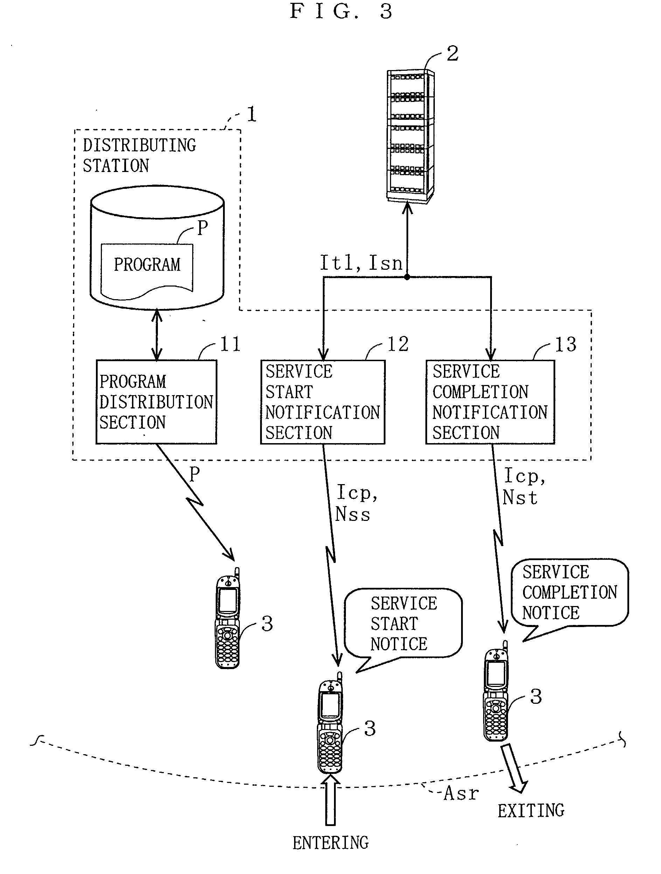

As shown in FIG. 3, in order to provide a service, the distributing station 1 includes a program distribution section 11, a service start notification section 12, and a service completion notification section 13. The program distribution section 11 distributes at least one computer program (hereinafter abbreviated as "program") P stored in the distributing station 1 to terminal devices 3 which are located within a service area (hereinafter abbreviated as an "area")Asr. The program P is written in a language which is executable by the terminal devices 3, e.g., JAVA^{(R)}. In the present embodiment, it is assumed that the program P describes a procedure for the terminal devices 3 to remote-control the target device 4. The area Asr defines a range within which the distributing station 1 is capable of distributing the program P, and is generally equal to the coverage of the radiowaves transmitted from the distributing station 1. As a specific example, the present embodiment assumes that the area Asr at least covers an extent several meters around the target device 4.

By referring to an entry Esn in the exchange station 2, the service start notification section 12 identifies a terminal device 3 which has entered the area Asr. To any such terminal device 3, the service start notification section 12 transmits identification information (hereinafter referred to as "program identification information") Icp which uniquely identifies each program P in the distributing station 1 and a service start notice Nss. Preferably, the service start notification section 12 transmits the program identification information Icp after transmitting the service start notice Nss. As the program identification information Icp, a numerical value or text string (typically the name of the program P) which is assigned to the program P, a date of creating the program P or the person who created the program P, a stored area of the program P, or any combination thereof can be used. In the following descriptions, a unit of program identification information Icp that is assigned to a given program P will be referred to as the "associated program identification information Icp". Furthermore, a program P which is uniquely identified by its associated program identification information Icp will be referred to as the "relevant program P".

By referring to an entry Esn in the exchange station 2, the service completion notification section 13 identifies a terminal device 3 which is exiting the area Asr. To any such terminal device 3, the service completion notification section 13 transmits the aforementioned program identification information Icp and a service completion notice Nst.

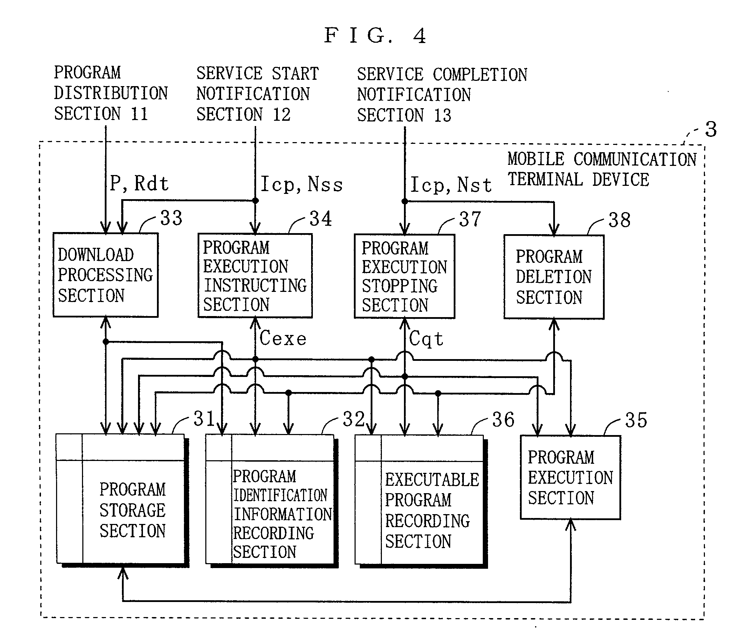

Referring back to FIG. 1, each terminal device 3 is a device capable of mobile communications, e.g., a cellular phone, a simplified type of cellular phone (so-called PHS (Personal Handy-phone System)). As shown in FIG. 4, in order to be able to receive services, each terminal device 3 includes a program storage section 31, a program identification information recording section 32, a download processing section 33, a program execution instructing section 34, a program execution section 35, an executable program recording section 36, a program execution stopping section 37, and a program deletion section 38.

The program storage section 31 is typically implemented as a memory which is mounted in the terminal device 3, e.g., a RAM (Random Access Memory) or an SRAM (Static RAM) . Alternatively, the program storage section 31 may be implemented as a memory which is detachable from the terminal device 3, e.g., an SD(Secure Digital) card. As such, the program storage section 31 stores a program P which is transmitted from the program distribution section 11.

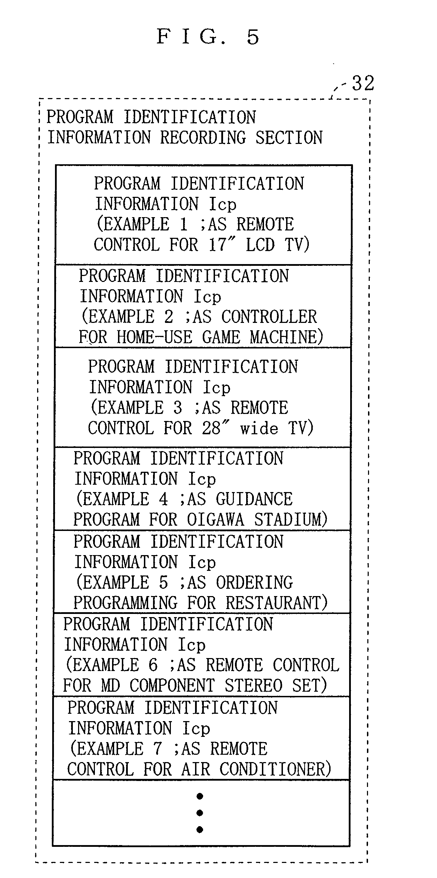

As shown in FIG. 5, the program identification information recording section 32, which is composed by a memory within the terminal device 3, records associated program identification information Icp.

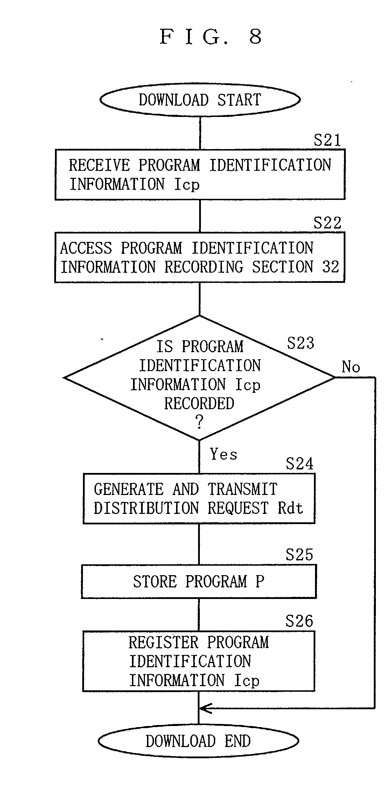

Referring back to FIG. 4, the download processing section 33 is typically realized by a processor which is mounted in the terminal device 3, e.g., an MPU (Micro Processing Unit). In summary, the download processing section 33 performs a process which involves writing in the program storage section 31 a program P which is sent from the program distribution section 11, as will be specifically described later with reference to FIG. 8.

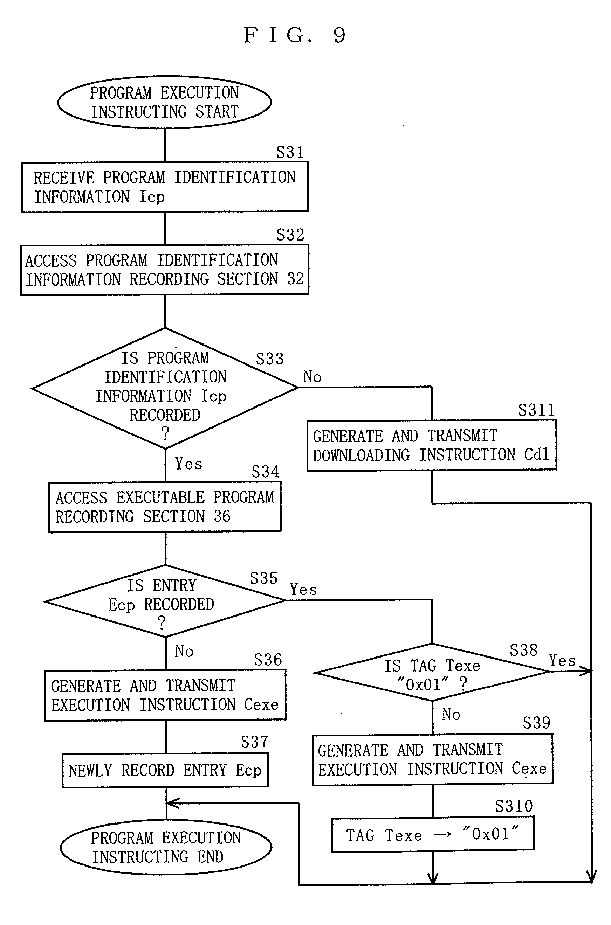

The program execution instructing section 34 is also implemented as a processor within the terminal device 3. In summary, the program execution instructing section 34 performs a process which involves, in response to the service start notice Nss from the service start notification section 12, instructing the program execution section 35 as to which program P is to be currently executed, as will be specifically described later with reference to FIG. 9.

The program execution section 35, which is typically implemented as a JAVA^{(R)} virtual machine (interpreter), executes the program P as instructed by the program execution instructing section 34. Although the present embodiment assumes that the program P is written in JAVA^{(R)} and that the program execution section 35 is a JAVA(R) virtual machine, the present invention is not limited to this particular combination. The program P and the program execution section 35 may be implemented in the form of any other language or any other interpreter. An interpreter can also be implemented by using an actual processor within the terminal device 3; in this case, however, the program P is required to be in an object format which is dependent on the processor.

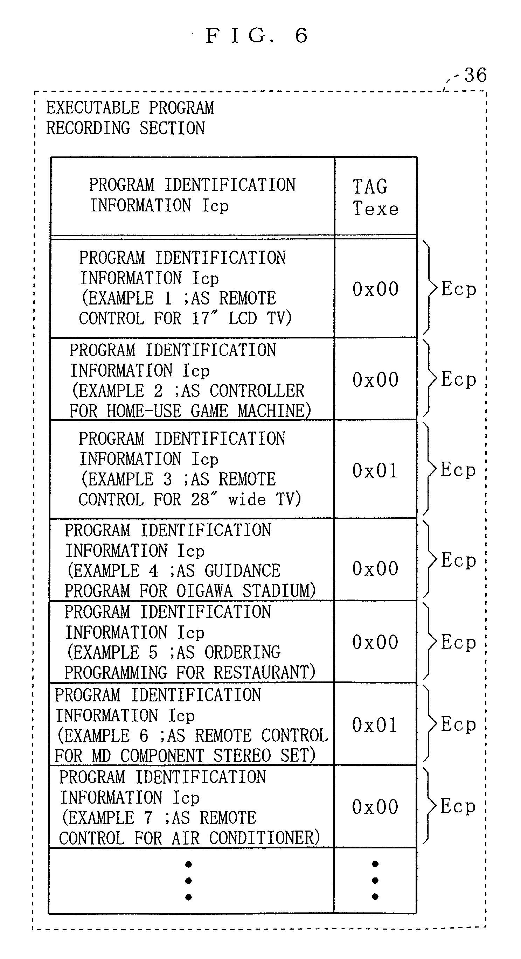

As shown in FIG. 6, the executable program recording section 36, which is composed by a memory within the terminal device 3, records as many entries Ecp as there are units of program identification information Icp (see FIG. 5) in the program identification information recording section 32. Each entry Ecp is a combination of a unit of program identification information Icp as described above and a tag Texe. Each tag Texe is a piece of information which indicates whether the relevant program P corresponding to the program identification information Icp that is associated with the tag Texe is under execution (i.e., being executed) or not. In the present embodiment, it is assumed that a tag Texe is expressed in the form of a 1 byte value. More specifically, a tag Texe having the 1 byte value "0x00" indicates that the relevant program P is not under execution, whereas a tag Texe having the 1 byte value "0x01" indicates that the relevant program P is under execution.

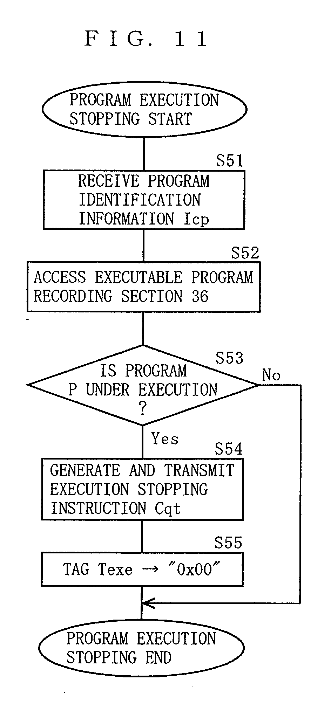

The program execution stopping section 37 is implemented as a processor within the terminal device 3. In summary, the program execution stopping section 37 performs a process which involves, in response to a service completion notice Nst from the service completion notification section 13, instructing the program execution section 35 as to which program P is to be closed, as will be specifically described later with reference to FIG. 11.

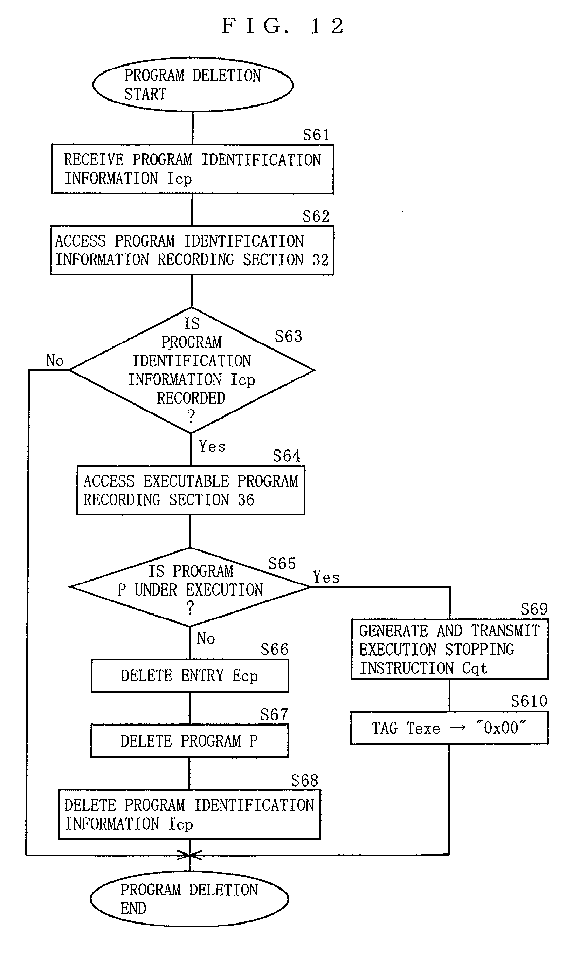

The program deletion section 38 is implemented as a processor within the terminal device 3. In summary, the program deletion section 38 performs a process which involves, in response to the aforementioned service completion notice Nst, deleting a program P which is no longer needed from the program storage section 31, as will be specifically described later with reference to FIG. 12.

Referring back to FIG. 1, the target device 4 is a device, e.g., a television television, which is remote-controlled by the terminal device 3 executing the program P.

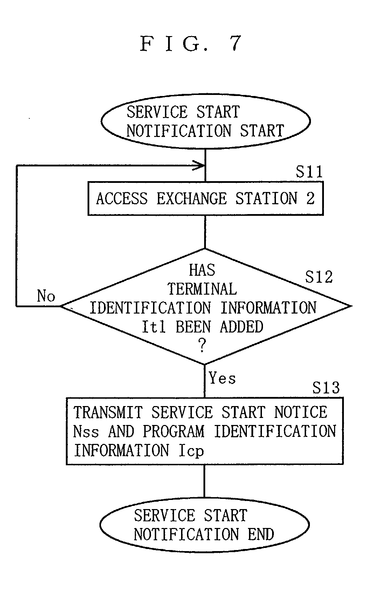

Next, the operation of the mobile communication system Sa having the above construction will be described. When a terminal device 3 enters the area Asr, the distributing station 1 performs the aforementioned location registration process, whereby terminal identification information Itl is registered in an entry Esn for the distributing station 1 (see FIG. 2) in the exchange station 2. After the terminal identification information Itl is registered, the service start notification section 12 of the distributing station 1 performs a service start notification process which comprises a procedure shown in FIG. 7. In FIG. 7, the service start notification section 12 first accesses the exchange station 2 (step S11). Next, the service start notification section 12 determines whether any new terminal identification information Itl has been added to the entry Esn for the distributing station 1 (see FIG. 2) or not (step S12). If no terminal identification information Itl has been added, the service start notification section 12 returns to step S11. On the other hand, if some new terminal identification information Itl has been added, the service start notification section 12 transmits the aforementioned service start notice Nss and program identification information Icp to the new terminal device(s) 3 (step S13).

The service start notice Nss and program identification information Icp are received by a receiver (not shown) in the terminal device 3, and the receiver passes these to the download processing section 33. In response to the service start notice Nss, the download processing section 33 performs a download process which comprises a procedure shown in FIG. 8. In FIG. 8, the download processing section 33 first receives the program identification information Icp (step S21). Next, the download processing section 33 accesses the program identification information recording section 32 (see FIG. 5) (step S22). Then, the download processing section 33 determines whether the currently-received program identification information Icp is recorded in the program identification information recording section 32 or not (step S23). If such is determined to have been recorded, it means that the relevant program P is stored in the program storage section 31, so that it is unnecessary to newly download the relevant program P. Therefore, the download processing section 33 ends the process of FIG. 8.

On the other hand, if the currently-received program identification information Icp is determined not to have been recorded, the download processing section 33 generates a distribution request Rdt for the relevant program P, and sends it to the distributing station 1 via a transmitter (not shown) in the terminal device 3 (step S24). At the distributing station 1, the program distribution section 11 transmits the relevant program P to the terminal device 3, in response to the received distribution request Rdt. The relevant program P as such is received by the aforementioned receiver, and transferred to the download processing section 33. The download processing section 33 stores the received relevant program P into the program storage section 31 (step S25). Furthermore, the download processing section 33 newly registers the program identification information Icp received at step S21, in the program identification information recording section 32 (step S26).

The aforementioned receiver also passes the received service start notice Nss and program identification information Icp to the program execution instructing section 34. In response to the service start notice Nss, the program execution instructing section 34 performs a program execution instructing process which comprises a procedure shown in FIG. 9. In FIG. 9, the program execution instructing section 34 receives the program identification information Icp, and thereafter accesses the program identification information recording section 32 (see FIG. 5) (step S31, S32). Then, the program execution instructing section 34 determines whether the currently-received program identification information Icp is recorded in the program identification information recording section 32 or not (step S33). If such is determined to have been recorded, the program execution instructing section 34 accesses the executable program recording section 36 (step S34).

Thereafter, the program execution instructing section 34 determines whether an entry Ecp of the relevant program P (hereinafter referred to as " relevant entry ") has been recorded in the executable program recording section 36 or not (step S35). If such is not determined to have been recorded, the program execution instructing section 34 generates an execution instruction Cexe for executing the relevant program P, and sends the generated execution instruction Cexe to the program execution section 35 together with the program identification information Icp (step 336). In response to the received execution instruction Cexe, the program execution section 35 accesses the program storage section 31, and thereafter begins executing the relevant program P which is identified by the received program identification information Icp. Furthermore, after step S36, the program execution instructing section 34 newly records the program identification information Icp received at step S31, and a tag Texe having the value "0x01" in the executable program recording section 36 as an entry Ecp for the relevant program P (see FIG. 6) (step S37).

When it is determined at step S35 that the relevant entry Ecp has been recorded, the program execution instructing section 34 determines whether the value of the tag (hereinafter referred to as the "relevant tag ") Texe which is set in association therewith is "0x01" or not (step S38). If the relevant tag Texe is not "0x01", the program execution instructing section 34 performs a process similar to that of step S36 (step S39), so that the program execution section 35 begins executing the relevant program P. Furthermore, the program execution instructing section 34 changes the relevant tag Texe to "0x01" after step S39 (step S310).

Through the above processes, once the execution of the relevant program P is begun, the user can use the terminal device 3 as a remote control for the target device 4 . As described above, in accordance with the mobile communication system Sa of the present embodiment, when a terminal device 3 enters the area Asr, the terminal device 3 automatically downloads the program P from the distributing station 1 and executes the program P. Therefore, the user is not required to operate the terminal device 3 in order to download the program P. Thus, a mobile communication system Sa which is more convenient than a conventional mobile communication system is provided.

If it is determined at step S38 that the relevant tag Texe is "0x01", the relevant program P is under execution. Therefore, the program execution instructing section 34 determines that it is not necessary to further execute the relevant program P, and the process of FIG. 9 is over.

If it is determined at step S33 that the currently-received program identification information Icp has not been recorded, the program execution instructing section 34 preferably performs step S311. Specifically, the program execution instructing section 34 generates a downloading instruction Cdl for downloading the relevant program P, and passes the downloading instruction Cdl and the associated program identification information Icp to the download processing section 33 (step S311). In response to the received downloading instruction Cdl, the download processing section 33 begins a process similar to that illustrated in FIG. 8. Alternatively, if it is determined at step S33 that the program identification information Icp has not been recorded, the program execution instructing section 34 may end the process of FIG. 9 without performing the process of step S311.

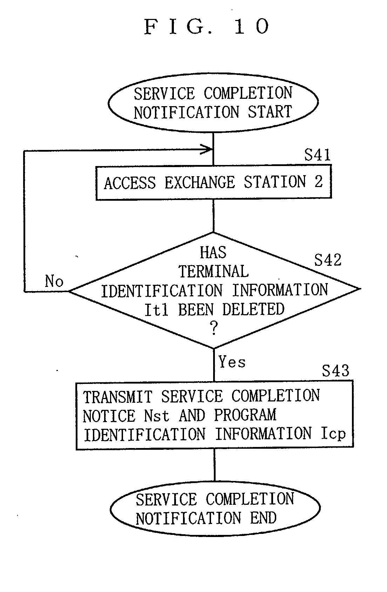

If the user of the terminal device 3 has moved from the area Asr to another area (not shown), a distributing station (not shown) in the newly entered area performs the aforementioned location registration process. As a result, the terminal identification information Itl is deleted from the entry Esn (see FIG. 2) for the distributing station 1 in the area Asr which the terminal device 3 was previously in, and instead the terminal identification information Itl is added to an entry for the distributing station (not shown) in the newly entered area. After the entry Esn is updated, the service completion notification section 13 of the distributing station 1 performs a service completion notification process which comprises a procedure shown in FIG. 10. In FIG. 10, the service completion notification section 13 first accesses the exchange station 2 with a predetermined timing (step S41). Next, the service completion notification section 13 determines whether or not the terminal identification information Itl has been deleted from the entry Esn for the distributing station 1 in the exchange station 2 (step S42). If the terminal identification information Itl has not been deleted, the service completion notification section 13 returns to step S41. On the other hand, if the terminal identification information Itl has been deleted, the service completion notification section 13 transmits the aforementioned service completion notice Nst and the program identification information Icp to the terminal device 3 (step S43).

The service completion notice Nst and the program identification information Icp as described above are received by a receiver (not shown) in the terminal device 3, and the receiver passes these to the program execution stopping section 37. In response to the service completion notice Nst, the program execution stopping section 37 performs an execution stopping process which comprises a procedure shown in FIG. 11. In FIG. 11, the program execution stopping section 37 first receives the program identification information Icp (step S51). Next, the program execution stopping section 37 accesses the executable program recording section 36 (step S52). Then, the program execution stopping section 37 determines whether the relevant program P corresponding to the currently-received program identification information Icp is under execution or not (step S53). More specifically, if an entry Ecp (see FIG. 6) for the relevant program P is not found in the executable program recording section 36, or if the value of the tag Texe of the entry Ecp is "0x00", it is determined at step S53 that the relevant program P is not under execution. In this case, the program execution stopping section 37 ends the process of FIG. 11.

On the other hand, if the tag Texe of the entry Ecp for the relevant program P is set to be "0x01", the program execution stopping section 37 proceeds from step S53 to step S54. Then, the program execution stopping section 37 generates an execution stopping instruction Cqt for stopping the execution of the relevant program P, and passes it to the program execution section 35 (step S54). In response to the received execution stopping instruction Cqt, the program execution section 35 stops execution of the relevant program P. Furthermore, after step S54, the program execution stopping section 37 changes the tag Texe of the entry Ecp for the relevant program P from "0x01" to "0x00" (step S55).

Moreover, after receiving the service completion notice Nst and the program identification information Icp transmitted at step S43, the aforementioned receiver passes these also to the program deletion section 38. In response to the service completion notice Nst, the program deletion section 38 performs a program deletion process which comprises a procedure shown in FIG. 12. In FIG. 12, the program deletion section 38 first receives the program identification information Icp (step S61). Next, the program deletion section 38 accesses the program identification information recording section 32 (step S62). Then, the program deletion section 38 checks whether the currently-received program identification information Icp is recorded or not (step S63), and if it is not recorded, ends the process of FIG. 12 because there is no program P to be deleted.

On the other hand, if the currently-received program identification information Icp is recorded, the program deletion section 38 accesses the executable program recording section 36 (step S64). Then, in a manner similar to step S53, the program deletion section 38 determines whether the relevant program P is under execution or not (step S65). If the relevant program P is not under execution, the program deletion section 38 deletes the entry Ecp for the relevant program P from the executable program recording section 36 (step S66). Furthermore, the program deletion section 38 accesses the program storage section 31 to delete the relevant program P therefrom (step S67). The program deletion section 38 also accesses the program identification information recording section 32 to delete the currently-received program identification information Icp therefrom (step S68).

Through the above processes, if the user exits the area Asr, the terminal device 3 automatically ends the execution of any program P under execution, and deletes the program P from the program storage section 31. Furthermore, if the user exits the area Asr, the terminal device 3 automatically deletes the program P which has been distributed from the distributing station 1. As a result, the user is not required to operate the terminal device 3 in order to delete the program P which is no longer needed. Thus, a mobile communication system Sa which is more convenient than a conventional mobile communication system is provided. Furthermore, since the no-longer-needed program P is deleted, the memory within the terminal device 3 can be efficiently utilized.

If it is determined at step S65 that the relevant program P is under execution, the program deletion section 38 preferably performs steps S69 and S610. Specifically, the program deletion section 38 generates an execution stopping instruction Cqt for executing the relevant program P, and passes it to the program execution section 35 (step S69). In response to the received execution stopping instruction Cqt, the program execution section 35 stops execution of the relevant program P. Furthermore, after step S69, the program deletion section 38 changes the tag Texe of the entry Ecp for the relevant program P from "0x01" to "0x00" (step S610). Alternatively, if it is determined at step S65 that the relevant program P is under execution, the program deletion section 38 may end the process of FIG. 12 without performing the process steps S69 and S610.

Although the above embodiment illustrates the target device 4 as a television television which is remote-controlled by the program P, the present invention is not limited thereto. The mobile communication system Sa according to the present embodiment can also be applied to the following purposes . Firstly, the mobile communication system can be used for the purpose of distributing a program P for remote-controlling a home appliance (e.g., an air conditioner) as a target device 4 to the terminal device 3. In this case, too, it is preferable to design the distributing station 1 so that the area Asr at least covers an extent several meters around the target device 4.

Secondly, the mobile communication system can be used in a facility such as a restaurant, for the purpose of distributing a program P which enables the terminal device 3 to be used as a device with which a user selects and orders an item from a menu. In this case, the target device 4 is a server which is installed at the facility for collecting orders, and the terminal device 3 remote-controls such a server.

Moreover, the mobile communication system can be used in a facility such as a library, for the purpose of distributing a program P which enables the terminal device 3 to be used as a device with which a user obtains guidance within the facility, searches for books/magazines, or makes reservations for books/magazines. In this case, the target device 4 is a server which is installed at the facility for enabling guidance within the facility, searches for books/magazines, or reservations for books/magazines, and the terminal device 3 remote-controls such a server.

Thirdly, the mobile communication system can be used in a shop such as a bookstore, a compact disk shop, or a department store, for the purpose of distributing a program P which enables the terminal device 3 to be used as a device with which a user searches for a place to look for a desired item or an item which is present in the shop, or makes a reservation for an item to be purchased. In this case, the target device 4 is a server which is installed at the shop for enabling shop guidance, item search or reservations for items to be purchased, and the terminal device 3 remote-controls such a server.

As for the above three purposes, the area Asr is determined depending on the extent of the facility or shop.

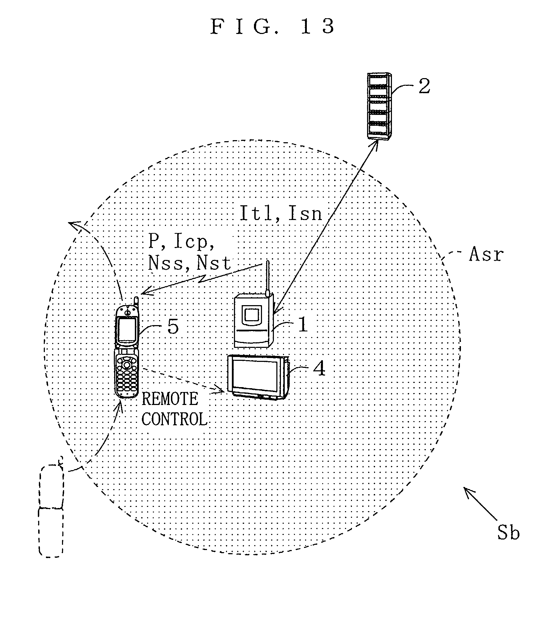

FIG. 13 is a schematic diagram illustrating the structure of a mobile communication system Sb as a variant of the mobile communication system Sa shown in FIG. 1. The present mobile communication system Sb differs from the mobile communication system Sa in that, instead of the terminal device 3, at least one mobile communication terminal device (hereinafter abbreviated as a "terminal device") 5 is comprised. Since there are no other structural differences between the systems Sb and Sa, those component elements in FIG. 13 which have their counterparts in FIG. 1 are denoted by like numerals, and the descriptions thereof are omitted.

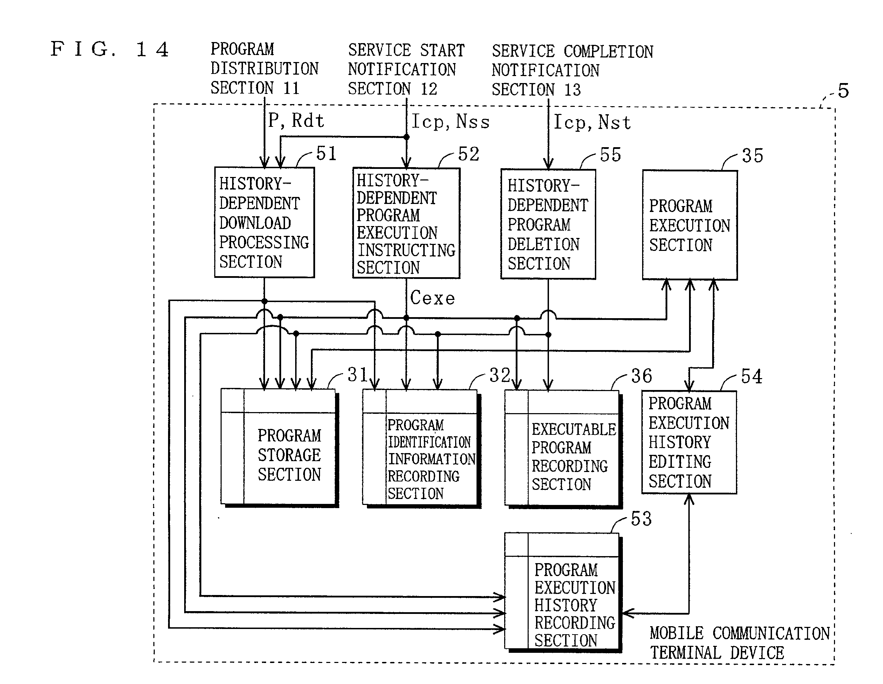

As is the case with the terminal device 3, the terminal device 5 is capable of performing mobile communications . In order to be able to receive services, as shown in FIG. 14, the terminal device 5 comprises a program storage section 31, a program identification information recording section 32, a program execution section 35, an executable program recording section 36, a history-dependent download processing section 51, a history-dependent program execution instructing section 52, a program execution history recording section 53, a program execution history editing section 54, and a history-dependent program deletion section 55. Since the program storage section 31, the program identification information recording section 32, the program execution section 35, and the executable program recording section 36 are identical to their counterparts illustrated in FIG. 4, any detailed descriptions thereof are omitted.

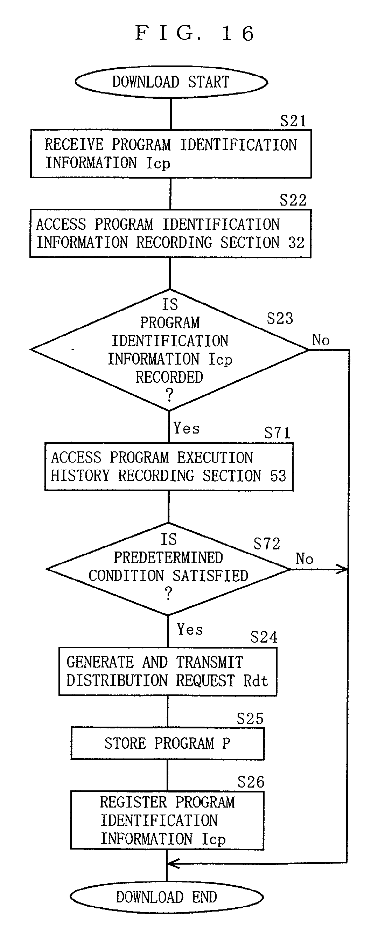

The history-dependent download processing section 51 is typically realized by a processor which is mounted in the terminal device 5, e.g., an MPU (Micro Processing Unit). In summary, the history-dependent download processing section 51 performs a process which involves, while referring to the program execution history recording section 53, downloading a program P which is transmitted from the program distribution section 11 and writing the downloaded program P to the program storage section 31, as will be specifically described later with reference to FIG. 16.

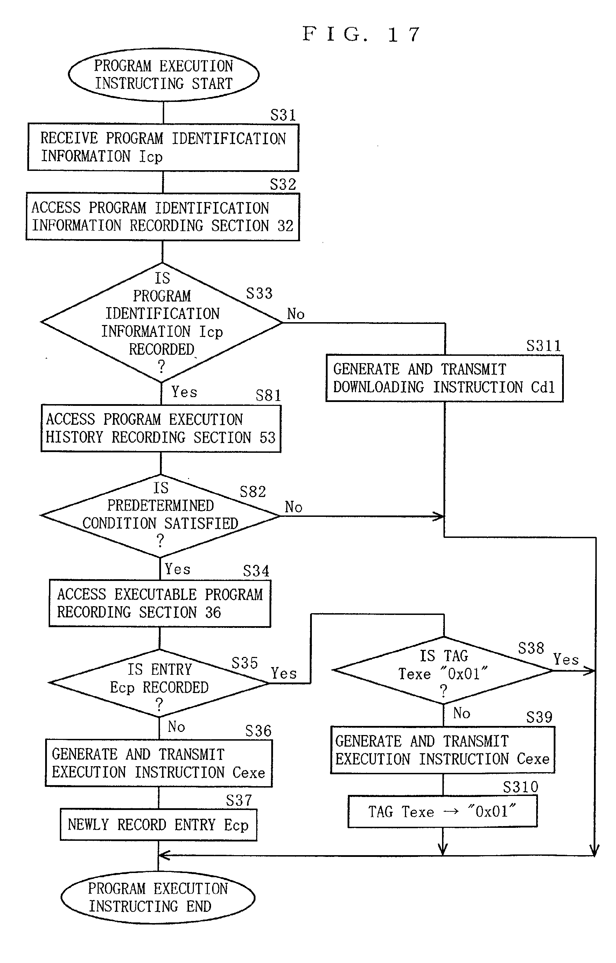

The history-dependent program execution instructing section 52 is also implemented as a processor within the terminal device 5. In summary, the history-dependent program execution instructing section 52 performs a process which involves operating in response to a service start notice Nss from the service start notification section 12, and instructing the program execution section 35 as to which program P is to be currently executed while referring to the program execution history recording section 53, as will be specifically described later with reference to FIG. 17.

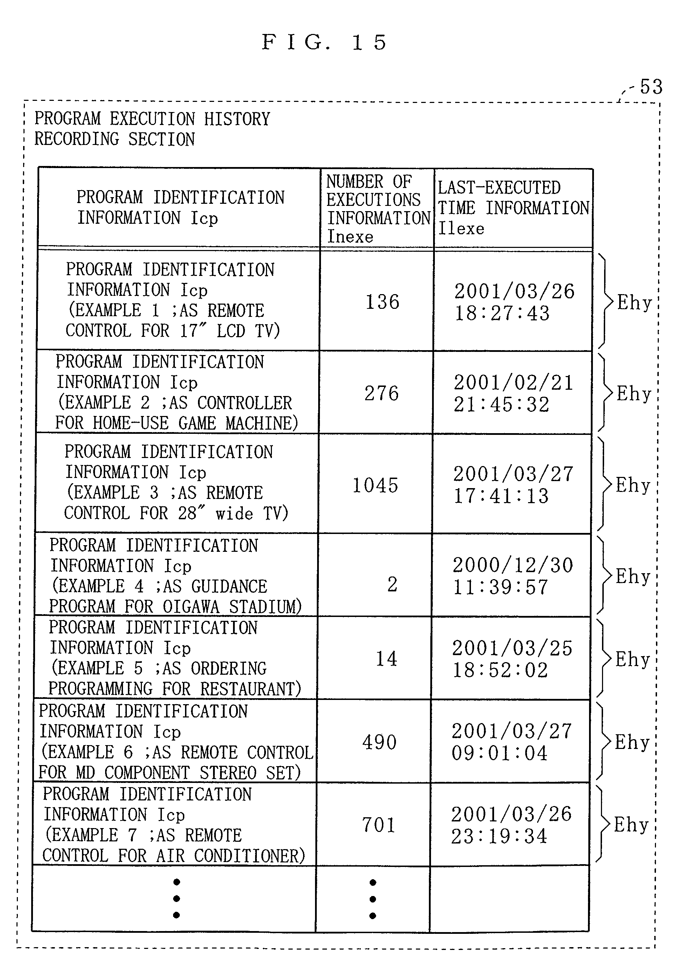

The program execution history recording section 53 is typically implemented as a memory which is mounted in the terminal device 5, e.g., a RAM (Random Access Memory) or an SRAM (Static RAM). Alternatively, the program execution history recording section 53 may be implemented as a memory which is detachable from the terminal device 5, e.g., an SD(Secure Digital) card. As shown in FIG. 15, in the program execution history recording section 53, an entry Ehy is recorded for every program P that has been executed by the program execution section 35. Each entry Ehy comprises a combination of program identification information Icp, number of executions information Inexe, and last-executed time information Ilexe. The program identification information Icp concerns a program P which has been executed by the program execution history recording section 53. The number of executions information Inexe indicates the number of times (e.g., in a decimal representation) the relevant program P corresponding to the associated program identification information Icp has been executed. The last-executed time information Ilexe indicates a date and time on which the relevant program P was last executed.

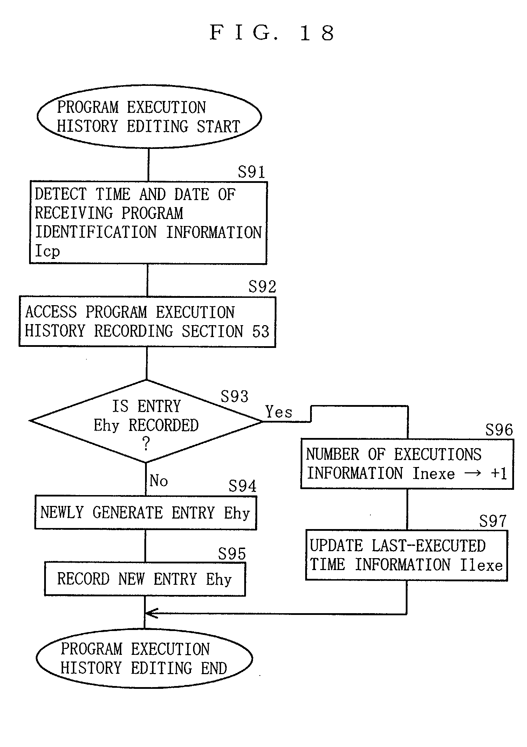

Referring back to FIG. 14, the program execution history editing section 54 is implemented as a processor within the terminal device 5. In summary, the program execution history editing section 54 performs a process which involves, based on the current state of execution of the program P by the program execution section 35, newly generating an entry Ehy in the program execution history recording section 53 or updating an already-existing entry Ehy, as will be specifically described later with reference to FIG. 18.

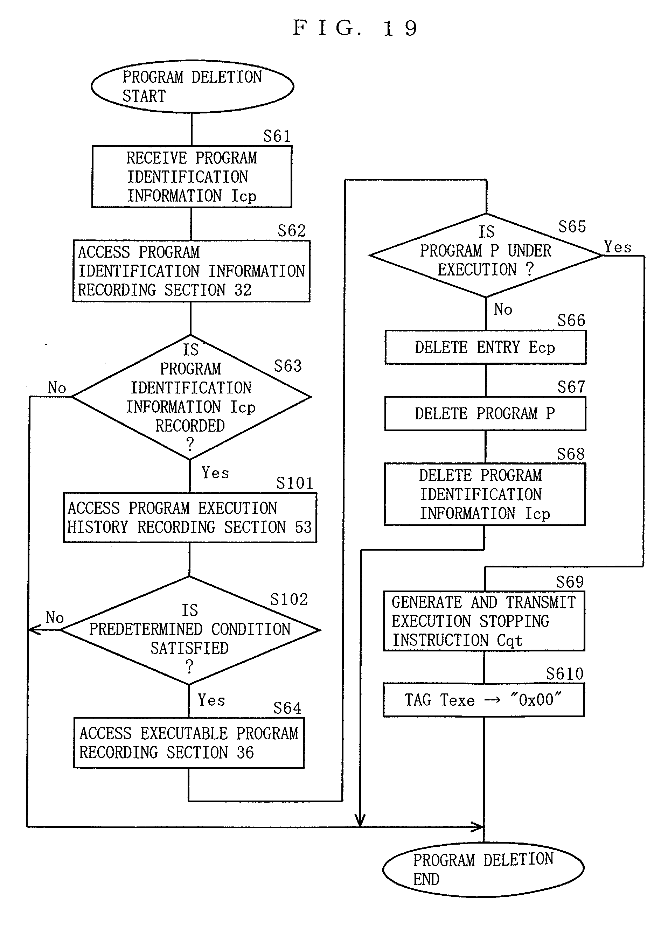

The history-dependent program deletion section 55 is implemented as a processor within the terminal device 5. In summary, the history-dependent program deletion section 55 performs a process which involves operating in response to the aforementioned service completion notice Nst, and by referring to the program execution history recording section 53, deleting a program P which is no longer needed from the program storage section 31, as will be specifically described later with reference to FIG. 19.

Next, the operation of the mobile communication system Sb having the above structure will be described. When the terminal device 5 enters the area Asr, the distributing station 1 performs the aforementioned location registration process. Thereafter, the service start notification section 12 of the distributing station 1 performs the service start notification process which has been described with reference to FIG. 7.

The service start notice Nss and the program identification information Icp transmitted from the service start notification section 12 are received by a receiver (not shown) in the terminal device 5, and the receiver passes these to the history-dependent download processing section 51. In response to the service start notice Nss, the history-dependent download processing section 51 performs a download process which comprises a procedure shown in FIG. 16. FIG. 16 differs from FIG. 8 in that steps S71 and S72 are comprised. Since there are no other differences between the two flowcharts, those steps in FIG. 16 which have their counterparts in FIG. 8 are denoted by like numerals, and the descriptions thereof are omitted.

First, the history-dependent download processing section 51 performs steps S21 to S23. If it is determined at step S23 that the currently-received program identification information Icp is recorded in the program identification information recording section 32, the history-dependent download processing section 51 ends the process of FIG. 16.

On the other hand, if the currently-received program identification information Icp is not recorded, the history-dependent download processing section 51 accesses the program execution history recording section 53 (see FIG. 15) in order to determine whether or not to download the relevant program P (step S71). Then, the history-dependent download processing section 51 determines whether the entry Ehy for the relevant program P satisfies a predetermined condition or not (step S72).

At step S72, for example, it may be determined whether or not the number of executions information Inexe for the relevant program P is equal to or greater than 1, but the present invention is not limited thereto. Alternatively, it may be determined whether a predetermined number of days has not elapsed since the time and date indicated by the last-executed time information Ilexe for the relevant program P. Alternatively, it may be determined whether the number of executions information Inexe for the relevant program P exceeds a mean value of all numbers of executions information Inexe or not.

If it is determined at step S72 that the predetermined condition is satisfied, the history-dependent download processing section 51 performs the process beginning from step S24. On the other hand, if the predetermined condition is not satisfied, the history-dependent download processing section 51 ends the process of FIG. 16.

The aforementioned receiver passes the received service start notice Nss and program identification information Icp also to the history-dependent program execution instructing section 52. In response to the reception of the service start notice Nss, the history-dependent program execution instructing section 52 performs a program execution instructing process which comprises a procedure shown in FIG. 17. FIG. 17 differs from FIG. 9 in that steps S81 and S82 are further comprised. Since there are no other differences between the two flowcharts, those steps in FIG. 17 which have their counterparts in FIG. 9 are denoted by like numerals, and the descriptions thereof are omitted.

First, the history-dependent program execution instructing section 52 performs steps S31 to S33. If it is determined at step S33 that the currently-received program identification information Icp is recorded, the history-dependent program execution instructing section 52 accesses the program execution history recording section 53 (see FIG. 15) in order to determine whether or not to execute the relevant program P (step S81). Then, the history-dependent program execution instructing section 52 (see FIG. 15) determines whether the entry Ehy for the relevant program P satisfies a predetermined condition or not (step S82). It is assumed herein that the condition examined at step S82 is the same as that examined at step S72.

If it is determined at step S82 that the predetermined condition is satisfied, the history-dependent program execution instructing section 52 performs the process beginning from step S34. On the other hand, if the predetermined condition is not satisfied, the history-dependent program execution instructing section 52 ends the process of FIG. 17.

Through the above processes, once the execution of the relevant program P is begun, the user is enabled to use the terminal device 5 as a remote control for the target device 4. As described above, in accordance with the mobile communication system Sb of the present variant, when the terminal device 5 enters the area Asr, the terminal device 5 automatically downloads from the distributing station 1 a program P which satisfies the aforementioned predetermined condition and executes the downloaded program P. Therefore, the user is not required to operate the terminal device 5 for downloading. If the aforementioned predetermined condition is not satisfied, i.e., if it is determined that the relevant program P is not often executed, the program P is not downloaded or executed. As a result, an even more convenient mobile communication system Sb can be provided.

In addition to beginning execution of the relevant program P by the program execution section 35 through the above processes, the present variant is characterized in that the program identification information Icp received from the history-dependent program execution instructing section 52 is passed to the program execution history editing section 54. In response to the program identification information Icp, the program execution history editing section 54 performs a program execution history editing section process which comprises a procedure shown in FIG. 18. In FIG. 18, the program execution history editing section 54 first detects the time and date of receiving the program identification information Icp (step S91). Next, the program execution history editing section 54 accesses the program execution history recording section 53 (see FIG. 15) (step S92) to determine whether or not an entry Ehy containing the currently-received program identification information Icp (hereinafter referred to as the "relevant entry") is recorded therein (step S93). If the relevant entry Ehy is not found recorded, the program execution history editing section 54 newly generates an entry Ehy for the relevant program P (step S94). The newly-generated entry Ehy comprises the currently-received program identification information Icp, number of executions information Inexe which is set to an initial value "1", and last-executed time information Ilexe, which indicates the time and date detected at step S91. The program execution history editing section 54 records such an entry Ehy in the program execution history recording section 53 (step S95).

On the other hand, if the relevant entry Ehy is found recorded at step S93, the program execution history editing section 54 increments its number of executions information Inexe by one (step S96), and updates the last-executed time information Ilexe from the current value to the time and date detected at step S91 (step S97).

If the user of the terminal device 5 moves from the area Asr to another area (not shown), a distributing station (not shown) in the newly entered area performs the aforementioned location registration process. As a result, the terminal identification information Itl is deleted from the entry Esn (see FIG. 2) for the distributing station 1 in the area Asr which the terminal device 5 was previously in, and instead the terminal identification information Itl is added to an entry for the distributing station (not shown) in the newly entered area. After the entry Esn is updated, the service completion notification section 13 of the distributing station 1 performs the service completion notification process which has been described with reference to FIG. 10. Moreover, in response to the service completion notice Nst and program identification information Icp from the service completion notification section 13, the terminal device 5 performs the execution stopping process which has been described with reference to FIG. 11.

The service completion notice Nst and the program identification information Icp which have been sent to the terminal device 5 are also passed to the history-dependent program deletion section 55. In response to the service completion notice Nst, the history-dependent program deletion section 55 performs a program deletion process which comprises a procedure shown in FIG. 19. FIG. 19 differs from FIG. 12 in that steps S101 and S102 are further comprised. Since there are no other differences between the two flowcharts, those steps in FIG. 19 which have their counterparts in FIG. 12 are denoted by like numerals, and the descriptions thereof are omitted.

First, the history-dependent program deletion section 55 executes the process from steps S61 to S63. If it is determined at step S63 that the currently-received program identification information Icp is recorded in the program identification information recording section 32, the history-dependent program deletion section 55 accesses the program execution history recording section 53(see FIG. 15) in order to determine whether or not to delete the relevant program P (step S101). Then, the history-dependent program deletion section 55 determines whether the entry Ehy for the relevant program P satisfies a predetermined condition or not (step S102).

At step S102, for example, it may be determined whether the number of executions information Inexe for the relevant program P is the smallest of all; however, the present invention is not limited thereto. Alternatively, it may be determined whether the last-executed time information Ilexe for the relevant program P is the oldest or not.

If it is determined at step S102 that the predetermined condition is satisfied, the history-dependent program deletion section 55 performs the process beginning from step S64. On the other hand, if the predetermined condition is not satisfied, the history-dependent program deletion section 55 ends the process of FIG. 19.

Through the above processes, if the user exits the area Asr, the terminal device 5 automatically deletes a program P which is not often executed from the program storage section 31 by referring to the program execution history recording section 53. As a result, the user does not need to operate the terminal device 5 in order to delete an unimportant program P. Furthermore, even after the user exits the area Asr, important programs P are retained in the program storage section 31. Thus, an even more convenient mobile communication system Sb can be provided.

In the above variant, the history-dependent program deletion section 55 is illustrated as executing the process of FIG. 19 in response to a service completion notice Nst; however, the present invention is not limited thereto. For example, the process of FIG. 19 may be executed when a preset time/date is reached, or the storage capacity of the program storage section 31 reaches a predetermined value.

In the above variant, the history-dependent program deletion section 55 is illustrated as deleting one program P; however, the present invention is not limited thereto. Alternatively, a plurality of programs P may be deleted. In this case, at step S102, the history-dependent program deletion section 55 may determine whether or not any program P exists that has not been executed for a predetermined period of time by referring to the last-executed time information Ilexe, and delete any program P that satisfies this condition, for example.

While the invention has been described in detail, the foregoing description is in all aspects illustrative and not restrictive. It is understood that numerous other modifications and variations can be devised without departing from the scope of the invention.

## Claims

1. A mobile communication system (Sa ,Sb) comprising a mobile communication terminal device (3,5) and a distributing station (1) which distributes a program previously stored in the distributing station to the mobile communication terminal device when the mobile communication terminal device is in a service area,
wherein,
the distributing station includes a service start notification section (12) for at least transmitting identification information concerning a program which the distributing station is capable of distributing to the mobile communication terminal device having entered the service area,
the mobile communication terminal device includes a download processing section (33,51) for generating a distribution request for the program corresponding to the program identification information received from the service start notification section, the generated distribution request being transmitted from the mobile communication terminal device to the distributing station,
the distributing station further includes a program distribution section (11) for distributing the program to the mobile communication terminal device in response to the received distribution request, and
the mobile communication terminal device further includes:
a program storage section (31) for storing the program transmitted from the program distribution section,
a program execution instructing section (34,52) for generating and transmitting an execution instruction for the program stored in the program storage section, and
a program execution section (35) for executing the program stored in the program storage section in response to the execution instruction from the program execution instructing section.

2. The mobile communication system according to claim 1, wherein,
when the program to be executed is not stored in the program storage section, the program execution instructing section generates a downloading instruction and transmits the downloading instruction to the download processing section, and
the download processing section generates a distribution request for the program in response to the downloading instruction from the program execution instructing section.

3. The mobile communication system according to claim 1, wherein
the distributing station further includes a service completion notification section (13) for at least transmitting identification information concerning the program having been distributed by the distributing station to the mobile communication terminal device having exited the service area,
the mobile communication terminal device further includes a program execution stopping section (37,52) for generating an execution stopping instruction for the program corresponding to the identification information received from the service completion notification section, and
the program execution section stops execution of the program in response to the execution stopping instruction from the program execution stopping section.

4. The mobile communication system according to claim 3, wherein the program execution stopping section generates the execution stopping instruction when the program corresponding to the received program identification information is under execution.

5. The mobile communication system according to claim 3, wherein the mobile communication terminal device further includes a program deletion section (38,55) for deleting the program whose execution has been stopped by the program execution section.

6. The mobile communication system according to claim 1, wherein
the mobile communication terminal device further includes a program execution history recording section (53) for recording an execution history of programs having been executed by the program execution section, and
the download processing section generates the distribution request by referring to the execution history recorded in the program execution history recording section.

7. The mobile communication system according to claim 1, wherein
the mobile communication terminal device further includes a program execution history recording section (53) for recording an execution history of programs having been executed by the program execution section, and
the program execution instructing section generates the execution instruction by referring to the execution history recorded in the program execution history recording section.

8. The mobile communication system according to claim 5, wherein
the mobile communication terminal device further includes a program execution history recording section (53) for recording an execution history of programs having been executed by the program execution section, and
the program deletion section deletes the program whose execution has been stopped by the program execution section by referring to the execution history recorded in the program execution history recording section.

9. The mobile communication system according to claim 1, wherein the program is written in JAVA^{(R)}.

10. A mobile communication terminal device (3,5), accommodated in a mobile communication system, for acquiring a program from a distributing station within a service area, wherein
the distributing station at least transmits identification information concerning a program which the distributing station is capable of transmitting to the mobile communication terminal device having entered the service area,
the mobile communication terminal device includes a download processing section (33,51) for generating a distribution request for the program corresponding to the program identification information received from the distributing station, the generated distribution request being transmitted from the mobile communication terminal device to the distributing station,
the distributing station distributes the program to the mobile communication terminal device in response to the received distribution request, and
the mobile communication terminal device further includes:
a program storage section for storing the program transmitted from the distributing station,
a program execution instructing section (34,52) for generating an execution instruction for the program stored in the program storage section, and
a program execution section (35) for executing the program stored in the program storage section in response to the execution instruction from the program execution instructing section.

11. A distributing station (1), accommodated in a mobile communication system, for distributing program to a mobile communication terminal device located in a service area, comprising:
a service start notification section (12) for at least transmitting identification information concerning a program which the distributing station is capable of transmitting to the mobile communication terminal device having entered the service area, wherein
the mobile communication terminal device generates a distribution request for the program corresponding to the program identification information received from the service start notification section, and
the distributing station further comprises a program distribution section (11) for distributing the program to the mobile communication terminal device in response to the distribution request generated by and transmitted from the mobile communication terminal device.

12. A program distribution method for causing a distributing station to distribute a program previously stored in the distributing station to a mobile communication terminal device when the mobile communication terminal device is in a service area, comprising:
a service start notification step (12), performed by the distributing station, of at least transmitting identification information concerning a program which the distributing station is capable of transmitting to the mobile communication terminal device having entered the service area,
a download step (33,51), performed by the mobile communication terminal device, of generating a distribution request for the program corresponding to the program identification information transmitted by the service start notification step,
a program distribution step (11), performed by the distributing station, of distributing the program to the mobile communication terminal device in response to the received distribution request,
a program storage step (31), performed by the mobile communication terminal device, of storing the program transmitted by the program distribution step,
a program execution instructing step (34,52), performed by the mobile communication terminal device, of generating and transmitting an execution instruction for the program stored by the program storage step, and
a program execution step (35), performed by the mobile communication terminal device, of executing the program stored by the program storage step in response to the execution instruction generated by the program execution instructing step.
